# FASCICULE DE BREVET EUROPEEN

(11) **EP 0 384 850 B1**
(45) Date de publication et mention de la délivrance du brevet: **02.11.1994**
(21) Numéro de dépôt: 90400532.9
(22) Date de dépôt: 26.02.1990
(51) Int. Cl.: B65G 67/02

(54) **Dispositif automatique d'immobilisation d'un véhicule sur une aire notamment d'un camion devant un quai de chargement**
Selbsttätige Anhaltevorrichtung für Kraftfahrzeuge, z.B. für einen Lastwagen an einer Laderampe
Automatic stopping device for a vehicle in particular for a truck in front of a loading bay

(30) Priorité: 24.02.1989 FR 8902424
(43) Date de publication de la demande: 29.08.1990
(73) Titulaire: Glomot, Gilles, F-87000 Limoges (FR); Penot, Etienne, F-87290 Chateauponsac (FR)
(72) Inventeur: Glomot, Gilles, F-87000 Limoges (FR); Penot, Etienne, F-87290 Chateauponsac (FR)
(74) Mandataire: Thébault, Jean-Louis

(56) Documents cités:
- DE-A- 2 735 826
- FR-A- 2 284 481
- FR-A- 2 597 042

## Description

La présente invention a pour objet un dispositif d'immobilisation de véhicules.

L'industrie du transport routier utilise des camions à gros volume de charge utile afin de réduire les coûts et d'améliorer le rendement. Les charges sont généralement introduites ou retirées des cellules à partir de quais de chargement qui sont à une hauteur telle qu'ils prolongent le plateau de la cellule. Des chariots automoteurs de manutention passent directement du quai dans la cellule afin d'effectuer les chargements et déplacements.

Dans ce but le chauffeur recule son camion jusqu'à ce que la partie arrière vienne en butée sur un dispositif amortisseur qui, généralement, assure la jonction entre le quai et le plateau de la cellule. Lors des opérations de chargement et déchargement, il peut néanmoins se produire des accidents. En effet, le chauffeur du camion attend généralement que son camion soit déchargé pour quitter le quai de chargement mais à la suite d'une mauvaise entente entre le cariste et le chauffeur, ce dernier croyant son camion prêt à partir, peut démarrer au moment où le cariste manoeuvre à la hauteur de la jonction quai-camion, ce qui provoque la chute du chariot entraînant avec lui le cariste et la charge.

Dans certaines applications particulières comme dans les abattoirs, les carcasses sont transportées par les chariots d'un convoyeur circulant sur des rails. Les cellules des camions frigorifiques comprennent un rail identique et une fois à quai le rail de la cellule et celui du convoyeur sont connectés pour assurer la continuité et le transfert des chariots de l'abattoir dans la cellule. Dans ce cas, un départ anticipé du camion, avant déconnexion, conduit à des dommages mécaniques importants.

Des solutions à ces problèmes ont été trouvées par les commissions de sécurité sans que ces solutions présentent toute satisfaction. Ainsi, les clés du camion sont données au cariste qui les garde sur lui avec les risques de perte que cela représente. Une autre solution propose d'enfermer les clés dans une boîte elle-même fermée dont seul le cariste détient le moyen d'ouverture. Dans le cas où l'entrepôt par exemple comprend de nombreux quais de chargement et une multiplicité de caristes, il faut multiplier le nombre de boîtes. Celles-ci, pour éviter les pertes de temps, doivent être à proximité du quai ce qui impose au cariste lors des changements d'affectation de quai, de changer de boîte donc de clé.

Ce premier élément de réponse au problème qui consiste en une consigne des clés du camion présente de nombreux inconvénients. Tout d'abord elle n'est pas automatique et comme elle nécessite une action volontaire du cariste et du chauffeur, elle peut ne pas être systématique.

D'autre part, même dans le cas où les clés sont enfermées, si le freinage du camion, sur une aire inclinée, vient à être défaillant, le risque subsiste.

D'autres solutions préconisent l'usage de cales mises en place par le cariste, mais cet effort volontaire présente les mêmes risques que précédemment, il faut une action volontaire du cariste, sujette à oubli, et une manoeuvre spéciale notamment pour le retrait qui nécessite une interruption du rythme de travail tout en présentant d'autres risques.

Le brevet US 4 207 019 propose un dispositif de blocage du camion manoeuvrable par le cariste pour sa mise en place et pour son retrait. La mise en place n'est donc pas automatique. Elle est plus particulièrement prévue pour être effectuée dans un cas particulier simultanément à l'abaissement d'un pont entre le quai et le plateau de la cellule du camion.

Le dispositif comprend un vérin orienté perpendiculairement au quai, sensiblement suivant l'axe longitudinal du camion. Le piston du vérin comprend deux bras articulés montés pivotants par rapport à un bâti recevant ce vérin de façon que ces bras puissent être orientés en position d'attente parallèlement à l'axe longitudinal du camion et en position de travail, perpendiculairement à ce même axe. Aux extrémités de ces bras sont prévues des cales qui viennent se positionner devant les roues du train arrière du camion lors de l'écartement de ces bras. En fonction de la position du train arrière du camion par rapport au quai, un second vérin assure le déplacement des bras en position écartée.

Un tel dispositif présente également de nombreux inconvénients, notamment celui de ne pas être automatique et de requérir un ajustage en position. De plus, dans certains cas les remorques peuvent être courtes à trois trains de pneus ce qui exclut la possibilité d'écarter les bras. En cas de passage du pneu par dessus la cale, aucun dispositif supplémentaire d'arrêt n'est prévu. Enfin, le fait que certaines parties mobiles du dispositif soient à même la surface de roulement est préjudiciable à la sécurité du personnel.

L'invention a pour but de proposer un dispositif automatique d'immobilisation dans une direction d'un véhicule qui dispense de l'intervention du cariste, qui soit à action simultanée à l'arrêt du véhicule, qui soit utilisable quels que soient la position et le nombre d'essieux du véhicule et qui présente une sécurité en cas de rupture d'un élément.

A cet effet, le dispositif automatique d'immobilisation d'un véhicule dans une première direction sur une aire limitée par une butée fixe dans une seconde direction opposée à la première, se caractérise en ce qu'il comprend une série de moyens de blocage dans une première direction, escamotables automatiquement lorsque le véhicule se déplace selon la seconde direction, alignés sensiblement le long d'un axe d'immobilisation parallèle à l'une des deux directions. Les moyens de blocage, selon une caractéristique particulière, sont escamotables par le passage des roues du véhicule durant son déplacement dans la seconde direction.

Selon une autre caractéristique les moyens de blocage sont des cales montées pivotantes par rapport à l'aire et dont les axes sont dans le plan de l'aire, orientés perpendiculairement à l'axe de blocage. Le dispositif est caractérisé également en ce qu'il comprend une commande d'escamotage simultané des cales.

L'invention est maintenant décrite selon un mode de réalisation particulier en regard des dessins annexés sur lesquels :
- la figure 1 représente une vue en perspective du dispositif selon l'invention appliqué à l'immobilisation d'un camion devant un quai de chargement,
- la figure 2 représente une vue en coupe suivant la ligne 2.2 d'une partie du dispositif représentée à la figure 1,
- la figure 3 représente un synoptique de fonctionnement du dispositif selon l'invention, et
- la figure 4 représente une vue en coupe d'une variante du dispositif de la figure 1 à actionnement par vérin.

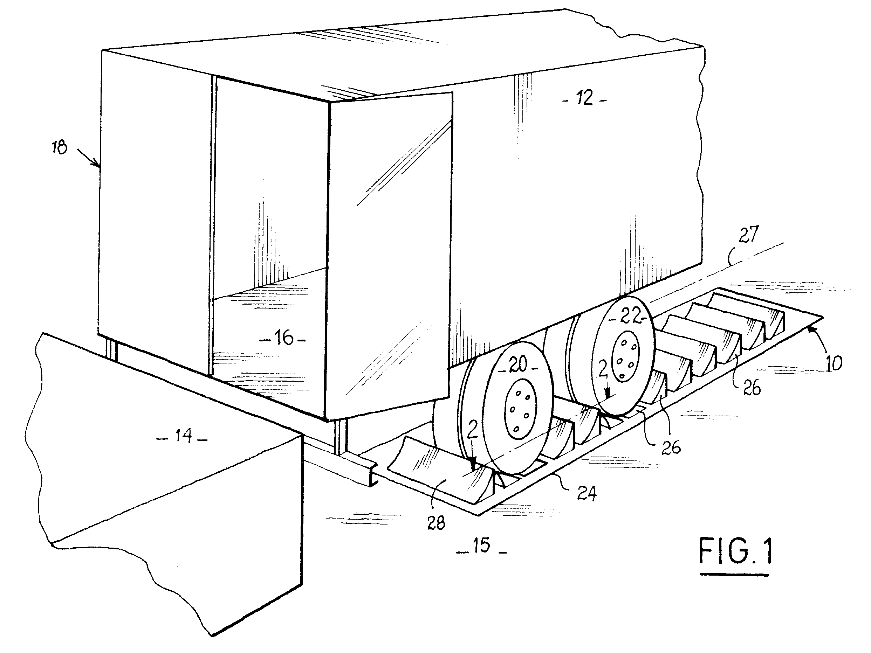

Sur la figure 1, le dispositif 10 d'immobilisation est représenté en fonctionnement pour assurer l'immobilisation d'un camion 12 devant un quai de chargement 14 sur une aire 15.

Le quai de chargement 14 est d'une hauteur telle qu'il permette l'accès au plateau 16 de la cellule 18 du camion. Dans un but de clarté du dessin, la passerelle d'accès au plateau ou les moyens amortisseurs ont été omis. Le camion 12 représenté comprend deux trains arrière 20 et 22.

Le dispositif d'immobilisation 10 comprend un bâti 24 et des cales 26 à section sensiblement triangulaire rectangle, leurs faces obliques 28 étant orientées vers le quai 14. Ces faces obliques sont légèrement courbes de façon à mieux épouser la surface de roulement des roues.

Ces cales sont orientées de façon que leurs axes longitudinaux soient perpendiculaires à l'axe d'immobilisation symbolisé en 27, sensiblement perpendiculaire au quai de chargement.

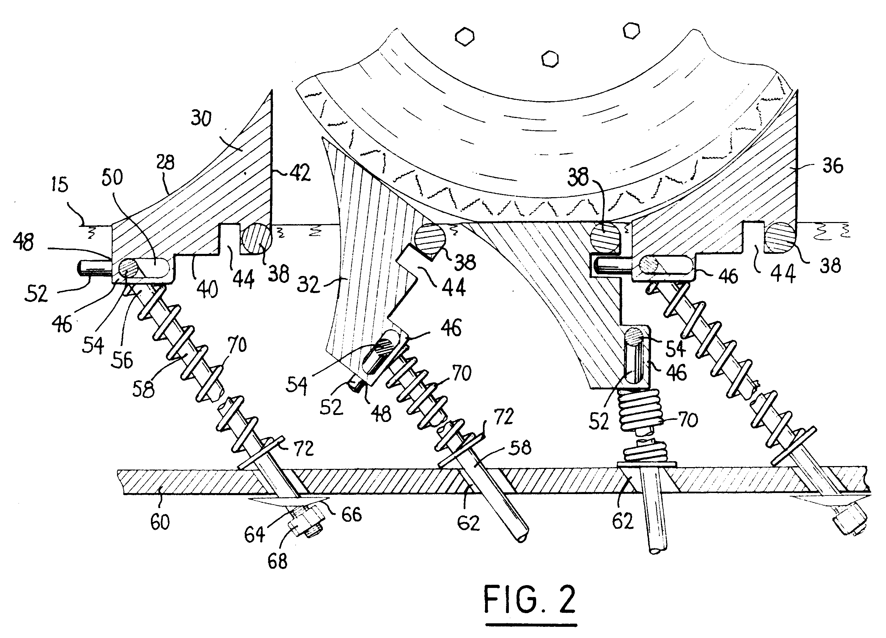

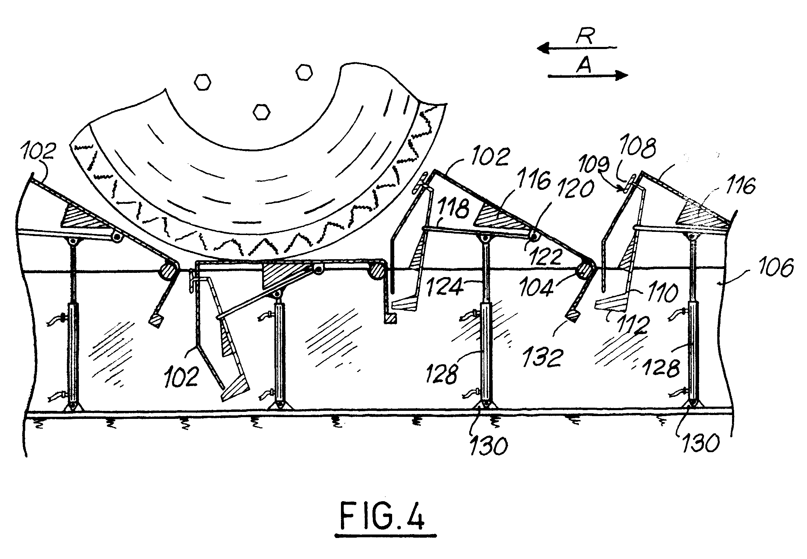

Sur la figure 2, on a représenté en coupe selon la ligne 2.2 de la figure 1, 4 cales repérées 30, 32, 34 et 36. Ces cales sont montées pivotantes par rapport à l'aire 15, au moyen d'axes 38 solidaires de ces cales. Ces axes sont situés immédiatement en dessous du plan de l'aire 15. Leurs extrémités sont montées dans les bagues intérieures de roulements à billes dont les bagues extérieures sont solidaires du bâti par exemple.

En position de repos telle qu'est représentée la cale 30, la deuxième face 40 de la cale dite inférieure est parallèle au plan de l'aire 15, et la troisième face 42 est perpendiculaire au plan de l'aire 15.

La face inférieure 40 comprend un logement 44 formant gâche à proximité immédiate de l'axe 38 et un bloc 46 faisant saillie à l'extrémité opposée.

Ce bloc comprend un alésage borgne 48 orienté perpendiculairement à l'axe 38 et un trou oblong 50 dont l'axe longitudinal est orienté parallèlement à l'alésage et dont l'axe transversal est parallèle à l'axe 38.

Dans l'alésage 48 est monté coulissant un ergot rétractable 52 formant pêne muni d'une goupille 54 solidaire de l'ergot et orientée perpendiculairement à celui-ci de façon à être translatée dans le trou oblong 50.

Sur cette goupille est articulée l'extrémité supéreure 56 d'une biellette 58. Cette biellette se prolonge jusqu'à une tringle 60 munie d'alésages 62 à travers l'un desquels passe ladite biellette.

La deuxième extrémité 64 de la biellette comprend une rondelle 66 d'un diamètre supérieur à l'alésage 62 et bloquée sur la biellette par un écrou 68.

Par ailleurs, un ressort de rappel 70 à spires non jointives est enfilé sur la biellette, l'une de ses extrémités prenant appui sur la cale et l'autre sur une rondelle d'arrêt 72 de diamètre supérieur à celui de l'alésage 62 et disposé entre la cale et la tringle.

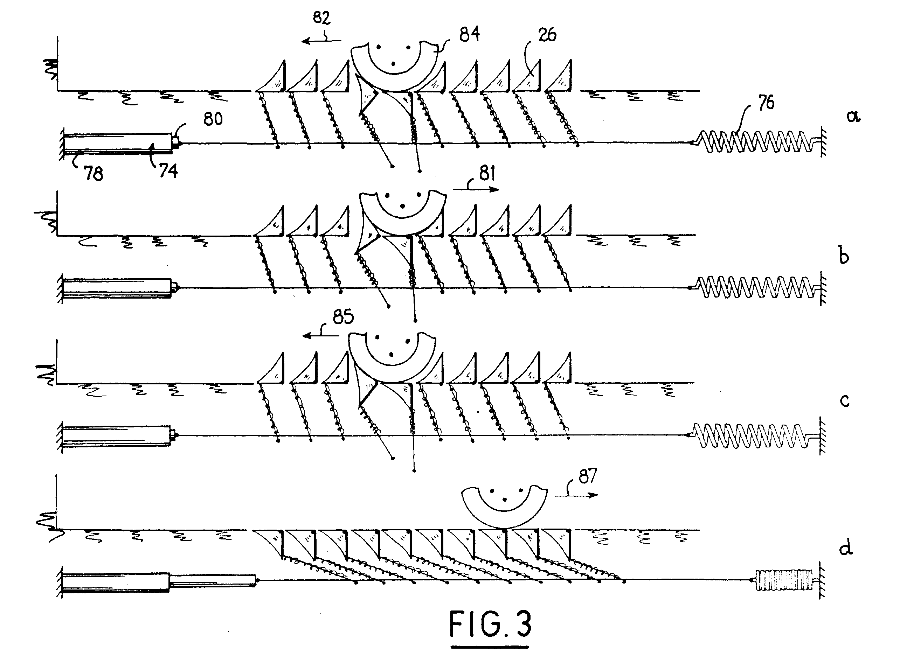

La tringle 60 est déplaçable en translation le long de son axe longitudinal. Ces moyens de déplacement en translation sont représentés sur la figure 3 et comprennent un vérin 74 électrique et un ressort 76. Le corps 78 du vérin est encastré et l'extrémité du piston 80 est articulée à l'extrémité de la tringle. Le vérin est fixé à l'extrémité de la tringle qui se situe sensiblement au droit du quai. D'autre part le ressort 76 est articulé par sa première spire à l'autre extrémité de la tringle et encastré par sa dernière spire.

Le montage est tel que lorsque le piston 80 est en position rentrée dans le corps 78 du vérin, le ressort 76 est en extension.

La raideur du ressort est prévue de façon que l'effort exercé par le ressort soit inférieur à la résistance à la rupture des différentes pièces mécaniques.

Le fonctionnement du dispositif est décrit ci-après en regard des étapes "a", "b", "c" et "d" de la figure 3.

Le camion n'est pas représenté pour une simplification des dessins, de même ce camion ne comprend qu'un essieu arrière unique.

A l'étape "a", le camion recule vers le quai suivant la flèche 82 et le pneu 84 du train arrière escamote les cales par pivotement de celles-ci au fur et à mesure jusqu'à ce que la cellule du camion vienne au contact des butées élastiques ou d'un moyen amortisseur connu prévu sur les quais.

C'est la position représentée à l'étape "a".

Le vérin 74 est en position rentrée et le ressort est tendu. Le pivotement des cales provoque la compression des ressorts de rappel 70 des cales escamotées ou en cours d'escamotage tandis que ces mêmes ressorts ramènent les cales en position initiale après le passage du pneu.

A l'étape "b", le chauffeur avance son camion suivant la flèche 81 ou plus exactement le laisse libre de revenir vers l'avant sous l'effort élastique exercé par le moyen amortisseur ou les butées, jusqu'à ce que le pneu vienne en appui sur une cale.

Cette position est représentée plus en détail sur la figure 2.

La cale 30 est en position d'attente puisque le pneu n'exerce sur elle aucun effort. La cale 32 est partiellement basculée, la biellette 58 correspondante coulisse et pivote dans l'alésage 62 tandis que le ressort 70 est partiellement comprimé entre la rondelle d'arrêt 72 en appui sur la tringle et la cale. Quant à l'ergot rétractable 52 il est également partiellement rentré par coulissement de la goupille 54 dans le trou oblong 50.

La cale 34 est complètement escamotée et la biellette correspondante 58 est sensiblement verticale, le ressort 70 est comprimé jusqu'à rendre les spires jointives et l'ergot rétractable est en position rentrée.

Le logement 44 est alors orienté de telle façon que son axe longitudinal est horizontal. Il reçoit l'ergot rétractable 52 de la cale adjacente 36 qui est en position initiale et dont l'ergot fait saillie en totalité.

Le pneu vient en appui sur la cale 36 et l'ergot 52 de cette cale évite tout basculement de la cale compte tenu du fait que la cale 34 est immobilisée par le pneu et la charge à laquelle il est soumis.

Il y a donc une double sécurité du fait que la résultante des efforts exercés par le pneu est orientée de façon à faire pivoter la cale en position escamotée, pivotement auquel s'oppose le pneu et du fait de l'ergot.

D'autre part, si l'une des cales venait à casser les cales suivantes agiraient de la même façon, limitant ainsi le déplacement du camion en toutes circonstances.

L'étape "c" de la figure 3 montre le début de la libération du camion.

Il faut tout d'abord que le chauffeur recule son camion suivant la flèche 85 afin de libérer la cale sur laquelle le pneu du camion était en appui et il maintient son camion dans cette position.

Le cariste agit alors sur le vérin électrique dont le piston est déplacé jusqu'à ce que le ressort 76 se relâche et translate simultanément la tringle 60. Cette translation provoque l'escamotage simultané de l'ensemble des cales ainsi que représenté à l'étape "d" de cette figure 3. Le chauffeur averti par le cariste peut avancer et quitter le quai suivant la flèche 87. Ce moyen d'avertissement peut avantageusement être un feu de signalisation vert dont l'allumage est commandé par l'arrivée en butée de la tringle. Un tel moyen d'avertissement est connu pour d'autres applications et ne fait pas partie de l'invention.

Par ailleurs, des essais ont montré que la hauteur et la largeur de la cale ainsi que sa longueur pouvaient avantageusement avoir des dimensions comprises respectivement entre 16 et 20 cm, 16 et 20 cm et 30 et 40 cm. Quant au nombre de cales successives il peut être avantageusement compris entre 10 et 30.

Ainsi le dispositif selon l'invention permet l'immobilisation d'un véhicule sur une aire qui évite toute libération anticipée du véhicule sans l'intervention d'une personne autre que le chauffeur. Ce dispositif est entièrement automatique et seule l'action conjuguée du chauffeur et d'une tierce personne peut permettre la libération.

Il en est de même pour le dispositif représenté sur la figure 4 qui est une variante de réalisation du dispositif automatique d'immobilisation selon l'invention.

Ce dispositif comprend des cales 102, réalisées à partir de tôle pliée de forme sensiblement triangulaire également et montées pivotantes autour d'un axe 104 monté à rotation par rapport au bâti 106 du dispositif.

Chaque cale est en outre munie d'un organe de sécurité (108) comprenant une plaquette (109) disposée parallèlement au côté du petit triangle constituant la cale 102 et reliée à un levier 110 disposé à l'intérieur du volume défini par la cale. Ce levier 110 comprend, à son extrémité inférieure, un ergot 112 faisant saillie vers l'avant de la cale. Sur le levier 110 est fixé une came 114 de section triangulaire, la partie haute étant du côté de l'ergot 112.

Par ailleurs, la cale comprend à l'intérieur une butée 116 fixée sous la face de la cale correspondant au grand côté du triangle ainsi qu'une biellette 118 qui est montée pivotante par rapport à cette face autour d'un axe 120, lui-même monté tournant dans une chape 122, dont l'extrémité libre coopère avec le levier 110 et la came 114. La biellette 118 est fixée à proximité de sa partie médiane à l'extrémité de la tige 124 d'un vérin 126 fixé à même le bâti 106 et plus particulièrement à sa partie inférieure grâce à une chape 130 de façon qu'il puisse être articulé. Les vérins 126 sont du type pneumatique double effet et montés en parallèle sur deux circuits indépendants.

Dans le mode de réalisation présenté, la pression est comprise entre 2 et 10 bars.

Le fonctionnement de la variante est très proche de celui du mode de réalisation principal.

Le camion recule pour se mettre à quai dans le sens de la flèche R et au fur et à mesure qu'il recule la roue provoque l'abaissement des cales. En effet, la pression est maintenue en poussée dans les vérins pneumatiques mais elle est insuffisante pour s'opposer au poids du camion si bien que l'air est comprimé dans les vérins qui jouent le rôle de ressort. Les ergots 112 ne coopèrent pas avec les butées de sécurité si bien que rien ne s'oppose à l'abaissement des cales. Lorsque le camion à reculé en butée contre le quai de chargement il avance dans le sens de la flèche A pour venir en appui contre la première cale en position relevée tout en exerçant un effort sur la précédente qui est en position escamotée. Dans ce cas, l'ergot 112 de la première cale est en appui sur la butée de sécurité 132 de la deuxième cale adjacente en position escamotée ce qui interdit à la première cale de s'escamoter. De plus, la plaquette 109 constituant l'organe de sécurité 108 est soumise à la pression du pneu ce qui garantit le déplacement de l'ergot 112 afin qu'il vienne en appui contre la butée de sécurité 132. La roue est donc immobilisée.

Lorsque la roue doit être libérée le camion recule dans le sens de la flèche R sur une très courte distance tandis que les vérins sont alimentés en partie haute de façon que la tige 124 rentre dans le corps 128 du piston 126 provoquant simultanément l'escamotage de l'ensemble des cales. En effet, lorsque la tige 126 se déplace vers le bas, elle entraîne avec elle la biellette 118 qui exerce son action sur la came 114 qui provoque le recul du levier 110 et par là même désolidarise l'ergot 112 de la butée de sécurité 132 permettant ainsi le dévérouillage.

Dans certains cas, le recul du camion suivant la flèche R n'est pas nécessaire car la roue n'est pas obligatoirement en appui contre la cale précédente et contre la plaquette, ce qui permet un dévérouillage plus facile.

Le dispositif ainsi réalisé selon cette variante présente l'avantage d'être économique, car les cales peuvent être obtenues par pliage de tôle, et les pièces telles que l'ergot 112, la butée de sécurité 132 ou la came 114 sont de forme simple et peuvent être rapportées par soudage. Quant aux vérins pneumatiques, ils sont réalisés en grand nombre dans l'industrie et leurs prix les rendent maintenant très accessibles.

## Revendications

1. Dispositif automatique d'immobilisation d'un véhicule (12) dans une première direction sur une aire (15) limitée par une butée fixe (14) dans une seconde direction opposée à la première, caractérisé en ce qu'il comprend une série de moyens de blocage (26) dans la première direction, escamotables automatiquement lorsque le véhicule ce déplace selon la seconde direction, alignés sensiblement le long d'un axe (27) d'immobilisation parallèle à l'une des deux directions.

2. Dispositif selon la revendication 1 caractérisé en se que les moyens de blocage (26) sont essamotables par le passage des roues (20, 22) du véhicule (12) durant son déplacement dans la seconde direction le long de l'axe (27) d'immobilisation dans la seconde direction.

3. Dispositif selon la revendication 1 ou 2 caractérisé en ce que chaque moyen de blocage (26) comprend un organe de sécurité destiné à coopérer avec le moyen de blocage adjacent lorsqu'un premier moyen de blocage est en position escamotée et un second moyen adjacent est en position relevée.

4. Dispositif selon la revendication 3, caractérisé en ce que l'organe de sécurité du second moyen de blocage est un ergot (52) rétractable formant pêne qui coopère avec un logement (44) du second moyen de blocage formant gâche.

5. Dispositif selon l'une quelconque des revendications précédentes, caractérisé en ce que les moyens de blocage (26) sont des cales (30, 32, 34 et 36) montées pivotantes par rapport à l'aire (15) et en ce que les axes de pivotement (38) sont dans le plan de l'aire et orientés perpendiculairement à l'axe d'immobilisation (27).

6. Dispositif selon la revendication 5, caractérisé en ce que les cales (30, 32, 34 et 36) ont une section triangulaire rectangle et en ce que, en position d'attente, les faces obliques (28) sont orientées vers le quai.

7. Dispositif selon la revendication 5 ou 6, caractérisé en ce qu'il comprend une commande d'escamotage simultané des cales.

8. Dispositif selon la revendication 7, caractérisé en ce que la commande d'escamotage simultané comprend une tringle (60) mobile parallèlement à l'axe d'immobilisation et des biellettes (58) reliées par l'une de leurs extrémités (56) aux cales et montées coulissantes et articulées sur ladite tringle.

9. Dispositif selon la revendication 8 caractérisé en ce que l'extrémité (56) des biellettes reliée aux cales est articulée sur l'ergot rétractable (52).

10. Dispositif selon la revendication 8 ou 9, caractérisé en ce qu'il comprend des ressorts (70) de rappel interposés entre les cales et la tringle de façon à écarter ces cales de la tringle.

11. Dispositif selon la revendication 8, 9 ou 10, caractérisé en ce qu'il comprend des moyens de déplacement en translation de la tringle le long de son axe longitudinal.

12. Dispositif selon la revendication 11, caractérisé en ce que les moyens de déplacement en translation comprennent un vérin (74) et un ressort de rappel (76) disposés aux extrémités de la tringle (60).

13. Dispositif selon la revendication 12 caractérisé en ce que le vérin (74) est disposé sensiblement au droit du quai (14) de façon que le ressort (76) soit en extension lorsque le piston du vérin est en position rentrée.

14. Dispositif selon l'une quelconque des revendications 1, 2 ou 3 caractérisé en ce que les moyens de blocage comprennent des cales (102) munies chacune d'un vérin (126).

15. Dispositif selon la revendication 14 caractérisé en ce que chaque cale comprend en outre une biellette (118) interposée entre la cale et l'organe de sécurité (108), reliée à la tige du vérin de façon à débloquer l'organe de sécurité par traction à l'aide du vérin.

16. Dispositif selon la revendication 15 caractérisé en ce que l'organe de sécurité (108) comprend une plaquette (109) reliée à un levier (110) lui-même muni d'un ergot (112) coopérant avec une butée de sécurité (132) disposée sur la cale adjacente.

## Claims

1. Automatic device for the immobilization of a vehicle (12) in a first direction on an area (15) limited by a fixed stop (14) in a second direction opposite to the first, characterized in that it comprises a series of locking means (26) in the first direction, which are automatically retractable when the vehicle moves in the second direction and which are essentially aligned along an immobilization axis (27) parallel to one of the two directions.

2. Device according to claim 1, characterized in that the locking means (26) are retractable by the passage of the wheels (20, 22) of the vehicle (12) during its displacement in the second direction along the immobilization axis (27) in the second direction.

3. Device according to claim 1 or 2, characterized in that each locking means (26) comprises a safety member able to cooperate with the adjacent locking means when a first locking means is in the retracted position and a second adjacent means is in the raised position.

4. Device according to claim 3, characterized in that the safety member of the second locking means is a retractable lug (52) forming a bolt, which cooperates with a recess (44) of the second locking means forming a strike plate.

5. Device according to one of the preceding claims, characterized in that the locking means are blocks (30, 32, 34, 36) mounted so as to pivot with respect to the area (15) and in that the pivot pins (38) are in the plane of the area and oriented perpendicular to the immobilization axis (27).

6. Device according to claim 5, characterized in that the blocks (30, 32, 34, 36) have a right-angled triangular cross-section and in that, in the waiting position, the oblique faces (28) are oriented towards the platform.

7. Device according to claim 5 or 6, characterized in that it comprises a simultaneous block retraction control.

8. Device according to claim 7, characterized in that the simultaneous retraction control comprises a rod (60) mobile parallel to the immobilization axis and links (58) connected by one of their ends (56) to the blocks and mounted in sliding and articulated manner on said rod.

9. Device according to claim 8, characterized in that the end (56) of the links connected to the blocks is articulated on the retractable lug (52).

10. Device according to claim 8 or 9, characterized in that it comprises return springs (70) placed between the blocks and the rod so as to move the blocks away from the rod.

11. Device according to claim 8, 9 or 10, characterized in that it comprises means for the displacement in translation of the rod along its longitudinal axis.

12. Device according to claim 11, characterized in that the translation displacement means incorporate a jack (74) and a return spring (76) located at the ends of the rod (60).

13. Device according to claim 12, characterized in that the jack (74) is essentially placed to the right of the platform (14), so that the spring (76) is extended when the piston of the jack is in the retracted position.

14. Device according to any one of the claims 1, 2 or 3, characterized in that the locking means incorporate blocks (102), each of which is provided with a jack (126).

15. Device according to claim 14, characterized in that each block also comprises a link (118) placed between the block and the spring member (108), connected to the rod of the jack so as to unlock the safety member by pulling with the aid of the jack.

16. Device according to claim 15, characterized in that the safety member (108) comprises a plate (109) connected to a lever (110), which is in turn provided with a lug (112) cooperating with a safety stop (132) located on the adjacent block.

## Patentansprüche

1. Selbsttätige Anhaltevorrichtung für ein Kraftfahrzeug (12) in einer ersten Richtung auf einer Laderampe (15), die in einer der ersten Richtung gegenüberliegenden zweiten Richtung durch ein festes Widerlager (14) begrenzt ist,
**dadurch gekennzeichnet**, **daß**
sie eine Reihe von Mitteln (26) für eine Blockierung in der ersten Richtung enthält, die selbsttätig eingezogen werden können, wenn sich das Fahrzeug in der zweiten Richtung bewegt, und die weitgehend entlang einer Feststellachse (27) ausgerichtet sind, die parallel zu einer dieser beiden Richtungen verläuft.

2. Selbsttätige Anhaltevorrichtung nach Anspruch 1,
**dadurch gekennzeichnet**, **daß**
die Blockiermittel (26) mit Hilfe der Räder (20, 22) des Fahrzeuges (12) während der Bewegung desselben in der zweiten Richtung entlang der Feststellachse (27) in der zweiten Richtung eingezogen werden können.

3. Selbsttätige Anhaltevorrichtung nach einem der Ansprüche 1 oder 2,
**dadurch gekennzeichnet**, **daß**
jedes der Blockiermittel (26) ein Sicherungselement enthält, das dafür bestimmt ist, mit dem benachbarten Blockiermittel zusammenzuwirken, wenn sich ein erstes Blockiermittel in eingezogener Stellung befindet und sich ein benachbartes zweites Blockiermittel in hochgezogener Stellung befindet.

4. Selbsttätige Anhaltevorrichtung nach Anspruch 3,
**dadurch gekennzeichnet**, **daß**
das Sicherungselement des zweiten Blockiermittels ein einsiehbarer Zapfen (52) ist, welcher einen Schnapper bildet, der mit einer Aufnahme (44) für das Zweite Blockiermittel zusammenwirkt, die einen Rasthebel bildet.

5. Selbsttätige Anhaltevorrichtung nach einem der vorausgegangenen Ansprüche,
**dadurch gekennzeichnet**, **daß**
die Blockiermittel (26) aus Keilen (30, 32, 34, 36) bestehen, die schwenkbar gegenüber der Laderampe (15) montiert sind und dadurch, daß sich die Schwenkachsen (38) in der Ebene der Laderampe befinden und rechtwinklig zu der Feststellachse (27) ausgerichtet sind.

6. Selbsttätige Anhaltevorrichtung nach Anspruch 5,
**dadurch gekennzeichnet**, **daß**
die Keile (30, 32, 34, 36) den Querschnitt eines dreieickigen Rechtecks haben und dadurch, daß in der Wartestellung die schrägen Flächen (28) gegen die Laderampe gerichtet sind.

7. Selbsttätige Anhaltevorrichtung nach einem der Ansprüche 5 oder 6,
**dadurch gekennzeichnet**, **daß**
sie eine Betätigung für den gleichzeitigen Einzug der Keile aufweist.

8. Selbsttätige Anhaltevorrichtung nach Anspruch 7,
**dadurch gekennzeichnet**, **daß**
die Betätigung für den gleichzeitigen Einzug ein parallel zur Feststellachse bewegliches Gestänge (60) sowie Schwingarme (58) aufweist, die mit einem ihrer Enden (56) mit den Keilen verbunden und verschiebbar an diesem Gestänge angelenkt sind.

9. Selbsttätige Anhaltevorrichtung nach Anspruch 8,
**dadurch gekennzeichnet**, **daß**
das Ende (56) der mit den Keilen verbundenen Schwingarme an dem einziehbaren Zapfen (52) angelenkt ist.

10. Selbsttätige Anhaltevorrichtung nach einem der Ansprüche 8 oder 9,
**dadurch gekennzeichnet**, **daß**
sie Rückzugfedern (70) aufweist, die zwischen den Keilen und dem Gestänge so angeordnet sind, daß sie diese Keile von diesem Gestänge abspreizen.

11. Selbsttätige Anhaltevorrichtung nach einem der Ansprüche 8, 9 oder 10,
**dadurch gekennzeichnet**, **daß**
sie Mittel für die translatorische Verschiebung des Gestänges entlang seiner Längsachse aufweist.

12. Selbsttätige Anhaltevorrichtung nach Anspruch 11,
**dadurch gekennzeichnet**, **daß**
die Mittel für die translatorische Verschiebung einen Zylinder (74) und eine Rückzugfeder (76) aufweisen, die an den Enden des Gestänges (60) angeordnet sind.

13. Selbsttätige Anhaltevorrichtung nach Anspruch 12,
**dadurch gekennzeichnet**, **daß**
der Zylinder (74) weitgehend geradlinig zu der Laderampe (14) so angeordnet ist, daß die Feder (76) ausgefahren ist, wenn sich der Kolben des Zylinders in eingefahrener Stellung befindet.

14. Selbsttätige Anhaltevorrichtung nach einem der Ansprüche 1, 2 oder 3,
**dadurch gekennzeichnet**, **daß**
die Blockiermittel Keile (102) aufweisen, die jeweils mit einem Zylinder (126) ausgestattet sind.

15. Selbsttätige Anhaltevorrichtung nach Anspruch 14,
**dadurch gekennzeichnet**, **daß**
jeder der Keile außerdem einen Schwingarm (118) aufweist, der zwischen dem Keil und dem Sicherungselement (108) angeordnet ist und der an das Gestänge des Zylinders so angeschlossen ist, daß das Sicherungselement durch Zugkraft mit Hilfe des Zylinders entriegelt wird.

16. Selbsttätige Anhaltevorrichtung nach Anspruch 15,
**dadurch gekennzeichnet**, **daß**
das Sicherungselement (108) eine Platte (109) aufweist, die mit einem Hebel (110) verbunden ist, der selbst mit einem Zapfen (112) versehen ist, welcher mit einem Sicherungsanschlag (132) zusammenwirkt, der auf dem benachbarten Keil angeordnet ist.
